# EUROPEAN PATENT SPECIFICATION

(11) **EP 4 422 394 B1**
(45) Date of publication and mention of the grant of the patent: **19.11.2025**
(21) Application number: 22812831.0
(22) Date of filing: 26.10.2022
(51) Int. Cl.: A01M 7/00, A01C 7/20

(54) **APPARATUS AND METHOD FOR RECOGNIZING ONE OR MORE VEGETABLE ELEMENTS OF A PLANTATION, AND AGRICULTURAL MACHINE COMPRISING SAID APPARATUS**
VORRICHTUNG UND VERFAHREN ZUR ERKENNUNG EINES ODER MEHRERER PFLANZLICHER ELEMENTE EINER BEPFLANZUNG UND LANDWIRTSCHAFTLICHE MASCHINE MIT DER VORRICHTUNG
APPAREIL ET PROCÉDÉ SERVANT À RECONNAÎTRE UN OU PLUSIEURS ÉLÉMENTS VÉGÉTAUX D'UNE PLANTATION, ET MACHINE AGRICOLE COMPRENANT LEDIT APPAREIL

(30) Priority: 26.10.2021 IT 202100027488
(43) Date of publication of application: 04.09.2024
(73) Proprietor: MATERMACC SRL, 39100 Bolzano (BZ) (IT)
(72) Inventor: BRAGATTO, Enrico, 30021 CAORLE (IT); BUREL, Fabio, 30020 PRAMAGGIORE (IT); DE BORTOLI, Luca, 34127 TRIESTE (IT); FELTRIN, Marco, 33077 SACILE (IT); GALLINA, Paolo, 34127 TRIESTE (IT); MARSI, Stefano, 34127 TRIESTE (IT)
(74) Representative: Petraz, Gilberto Luigi
(86) International application number: PCT/IT2022/050285
(87) International publication number: WO 2023/073743

(56) References cited:
- US-A1- 2019 126 308
- US-A1- 2021 149 406

## Description

### FIELD OF THE INVENTION

The present invention concerns an apparatus and a method for recognizing one or more vegetable elements of a plantation, and also an agricultural machine comprising said apparatus, which can be applied in the field of agriculture, specifically in those sectors where it is necessary to subject the plantation to treatments through the use of external operating devices, such as, for example but not restrictively, spraying or hoeing treatments.

### BACKGROUND OF THE INVENTION

In the agricultural sector it is known to carry out treatments on some plantations through the use of external self-propelled operating devices, or devices towed by an agricultural tractor, which pass near a plantation on which specific work is to be performed. For example, an operating device can be a spraying device or a hoeing device.

Usually, known operating devices comprise a plurality of operating members which are driven continuously, without considering the shape or position of the plantation that will appear in front of them.

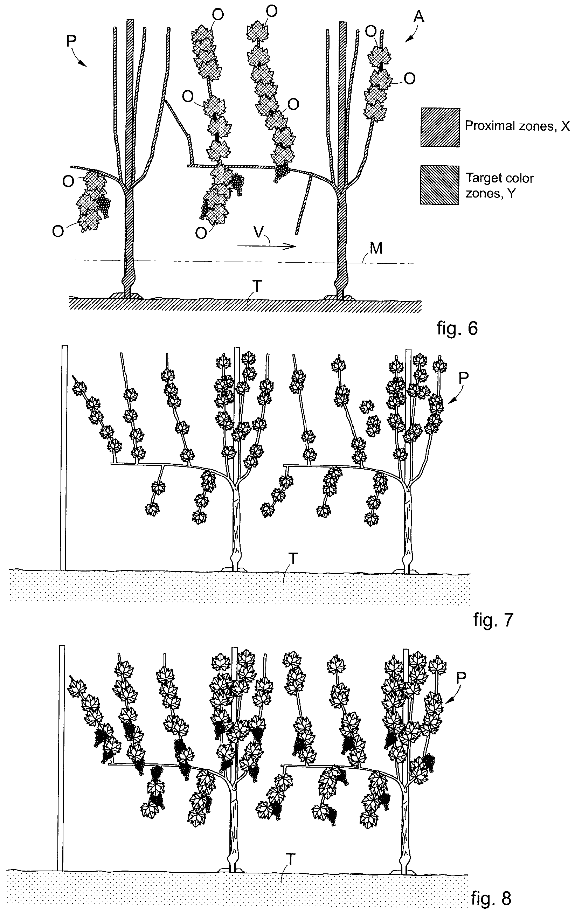

For example, it is known that the leaves of a plantation, in particular those of vines, are not homogeneously distributed in space but, on the contrary, they can be more concentrated in a certain zone and more thinned out in another zone. Moreover, it is also known that the leaves of a plantation also change their size and distribution according to the season, as shown by way of example in fig. 7, which schematically shows a row of a vineyard in early spring and in fig. 8 which shows the same row in late summer.

In the case of known sprayers, they do not take into account the irregular and/or non-homogeneous distribution of the leaves of the plantation and spray every zone of the latter in a constant and non-programmed manner, with the risk of spraying too much where it is not needed, or too little where more would be needed, thus decreasing the efficiency of known sprayers and wasting the agronomic product that they spray, with consequent damage of an economic, environmental and ecological type.

Another example may be the rows of plantations such as lettuce, salad and suchlike, between which it is necessary to carry out a hoeing operation and which are not always perfectly straight. Known hoeing devices do not take into account the not perfectly straight and parallel development of the rows of plantations and, sometimes, carry out the hoeing where it is not necessary, or in a position not perfectly halfway between two adjacent rows.

Documents US 2019/126308 A1 and US 2021/149406 A1 respectively describe a system for spraying plants with automatic selection of the nozzles and a method for analyzing single plants in an agricultural field. In particular, US'308 attempted to solve the disadvantages described above, but left shortcomings in determining the precise position, and especially in determining the volume, of the plants to be treated. The method described in US'406, on the other hand, is intended to obtain the predictive, and not the real instantaneous, determination of the profile of one or more plants containing metrics, such as for example a normalized vegetation index, an approximate volume, an approximate height, an approximate depth of the roots and other metrics.

There is therefore a need to perfect an apparatus and a method for recognizing a vegetable element of a plantation, and also an agricultural machine comprising said apparatus that can overcome at least one of the disadvantages of the state of the art.

To do this, it is necessary to solve the technical problem of directing, positioning or activating the operating members of the agricultural machine in relation to the position of the vegetable elements, such as the leaves or fruit, of the plantation.

In particular, one purpose of the present invention is to provide an apparatus and a method for recognizing a vegetable element in a plantation that allow to adjust the operation of an operating device of an agricultural machine in relation to the conformation of the plantation to be worked.

Another purpose of the present invention is to provide an apparatus and a method for recognizing a vegetable element in a plantation which allow to make at least some agricultural treatments more efficient.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, an apparatus according to the present invention for recognizing one or more vegetable elements of a plantation is provided with connection means configured to connect the apparatus to an operating device having both a plurality of operating members to carry out one or more works on the plantation, and also adjustment means configured to drive the operating members.

In accordance with one aspect of the present invention, the apparatus comprises recognition means configured to recognize, instant by instant, both the position and also the volume of the one or more vegetable elements, and a control unit connected to the recognition means and configured to selectively command the adjustment means as a function of the relative position between the one or more vegetable elements and the operating members, and as a function of the volume of the one or more vegetable elements.

By doing so, this apparatus allows to give, in real time and instant by instant, the sizes of the one or more vegetable elements (positioning and volume of the vegetation) so as to be able to drive the operating members in an optimized way on the basis of the instant recognition. By instantly knowing the spatial-temporal disposition of the one or more vegetable elements, the layout and design of the operating members, for example the number of nozzles, is particularly simplified, since it is sufficient for the operating members to be disposed in such a way as to cover the maximum size that the one or more vegetable elements are estimated to reach during their life cycle, while the selective and intelligent activation of the operating members is delegated to the control unit.

In accordance with another aspect of the present invention, the recognition means comprise at least one optical detector configured to acquire at least one image of the plantation, and a processing unit in which there are stored comparison algorithms configured to determine the distance between the at least one optical detector and the different portions of the plantation framed in the at least one image by exploiting the parallax effect in order to determine a set of proximal zones of the plantation. Such comparison algorithms allow for the "vertical" recognition of the vegetation present in the plantation.

In accordance with another aspect of the present invention, in the processing unit there are stored algorithms for detecting the pixels of at least one target color in the at least one image, in order to determine a set of target color zones of the plantation. Such detection algorithms allow for the "horizontal" recognition of the vegetation present in the plantation, mainly along its horizontal development.

In accordance with another aspect of the present invention, the at least one target color comprises at least the typical color of the vegetable elements to be recognized with the apparatus.

In accordance with another aspect of the present invention, in the processing unit there are stored algorithms for determining the one or more vegetable elements, which are configured to determine which are the zones of the plantation that are comprised both in the set of proximal zones, and also in the set of target color zones as above.

In accordance with another aspect of the present invention, in the processing unit there are also stored definition algorithms configured to define the one or more vegetable elements comprised at least in an intersection between the set of proximal zones and the set of target color zones.

In accordance with the present invention, the at least one optical detector comprises at least one monocular video camera. The monocular video camera is preferably capable of detecting colors.

According to one variant of the present invention, the at least one optical detector can comprise a 3D video camera. In this case, the comparison algorithms may not be needed.

Some embodiments of the present invention concern an agricultural machine comprising an operating device having a plurality of operating members to carry out one or more works on a plantation and adjustment means configured to drive the operating members.

In accordance with another aspect of the present invention, the agricultural machine as above also comprises an apparatus, as described here, for recognizing, instant by instant, the position and the volume of one or more vegetable elements of the plantation.

In accordance with another aspect of the present invention, the operating members comprise a plurality of delivery devices which can be selectively activated to deliver a jet of a liquid solution on the plantation, and the adjustment means are configured to selectively activate each of the delivery devices independently of each other. Furthermore, the control unit is configured to command the adjustment means in such a way as to activate only the delivery devices of the plurality of delivery devices whose jet is capable of spraying the one or more vegetable elements, as a function of their position and of their volume.

In accordance with another aspect of the present invention, the operating members comprise at least one hoeing member and the adjustment means are configured to move the at least one hoeing member. Furthermore, the control unit is configured to command the adjustment means to position the at least one hoeing member in a position adjacent to at least one of the one or more vegetable elements.

In accordance with another aspect of the present invention, the control unit is configured to command the adjustment means in such a way as to position the at least one hoeing member in an intermediate position between two adjacent rows of the one or more vegetable elements.

Some embodiments of the present invention also concern a method for recognizing one or more vegetable elements of a plantation which comprises the following steps:
- a travel step in which an agricultural machine is made to transit in the proximity of the plantation, the agricultural machine comprising both an operating device having a plurality of operating members to carry one or more works on the plantation and adjustment means configured to drive the operating members, and also an apparatus comprising recognition means configured to recognize, instant by instant, both the position and also the volume of one or more vegetable elements of the plantation, and a control unit connected to the recognition means and to the adjustment means to command the latter as a function of the relative position between the one or more vegetable elements and the operating members and of the volume of the one or more vegetable elements;
- an image acquisition step in which at least one image of the plantation is acquired by means of at least one optical detector connected to the control unit;
- a step of processing the at least one image to determine whether at least one of the one or more vegetable elements is framed therein;
- an activation step in which the adjustment means are activated to drive the operating members as a function of the position of the one or more vegetable elements.

In accordance with another aspect of the present invention, the processing step comprises at least the following sub-steps:
- a sub-step of evaluating the distance between the zones of the plantation framed in the at least one image and the corresponding optical detector which has acquired the at least an image in order to determine a set of proximal zones;
- a sub-step of detecting the pixels of the target color within the at least one image in order to determine a set of target color zones;
- a sub-step of determining at least one of the one or more vegetable elements which comprise at least one intersection between the set of proximal zones and the set of target color zones.

In accordance with another aspect of the present invention, in which the operating members comprise a plurality of delivery devices which can be selectively activated to deliver a jet of a liquid solution on the plantation and the adjustment means are configured to selectively activate each of the delivery devices independently of each other, the activation step as above comprises a delivery sub-step in which the control unit commands the adjustment means to activate only the delivery devices of the plurality of delivery devices whose jet is capable of spraying the one or more vegetable elements as a function of their position and of their volume.

In accordance with another aspect of the present invention, in which the operating members comprise at least one hoeing member and the adjustment means are configured to move the at least one hoeing member, the activation step as above comprises a movement sub-step in which the control unit commands the adjustment means to position the at least one hoeing member in a position adjacent to at least one of the vegetable elements.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a three-dimensional view of an example of a first agricultural operating device with which there is associated an apparatus in accordance with the present invention;
- fig. 2 is an enlarged detail of fig. 1;
- fig. 3 is a lateral view of an agricultural machine which comprises the device of fig. 1 in association with an apparatus in accordance with the present invention;
- fig. 4 is a rear view of the agricultural machine of fig. 3 in a condition of use;
- fig. 5 is a representation of an electrical diagram of an embodiment of the apparatus in accordance with the present invention;
- fig. 6 is a schematic view of an image acquired by an apparatus in accordance with the present invention;
- figs. 7 and 8 are two lateral views of an example plantation, taken in two different periods of the year and on which the agricultural machine of figs. 3 and 4 can perform a spraying treatment;
- fig. 9 is a schematic view of another image acquired by an apparatus in accordance with the present invention;
- figs. 10 and 11 are schematic views from above of another agricultural machine comprising a second operating device associated with an apparatus in accordance with the present invention;
- fig. 12 is a representation of an electrical diagram of an embodiment of the apparatus in accordance with the present invention.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTSOF THE PRESENT INVENTION

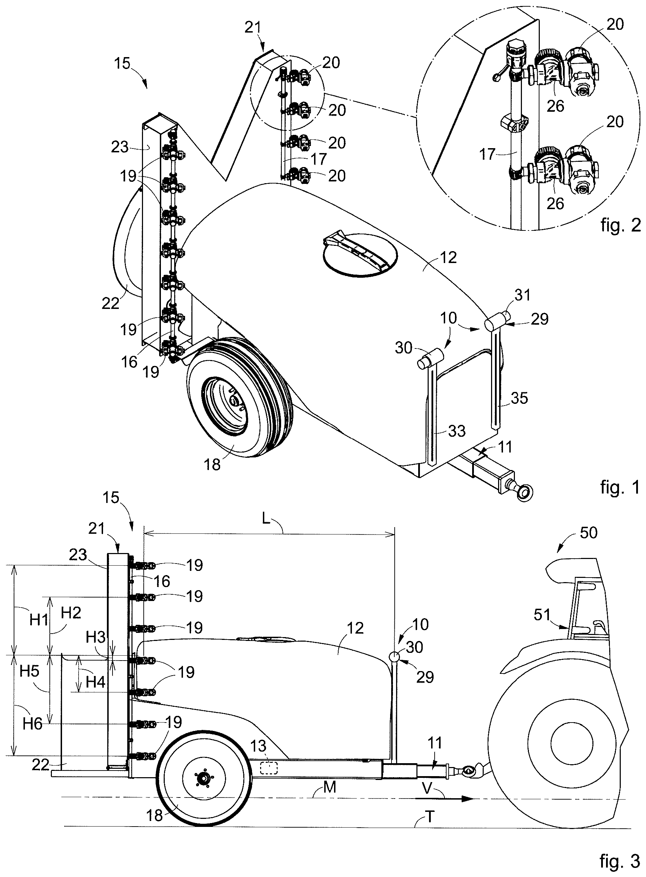

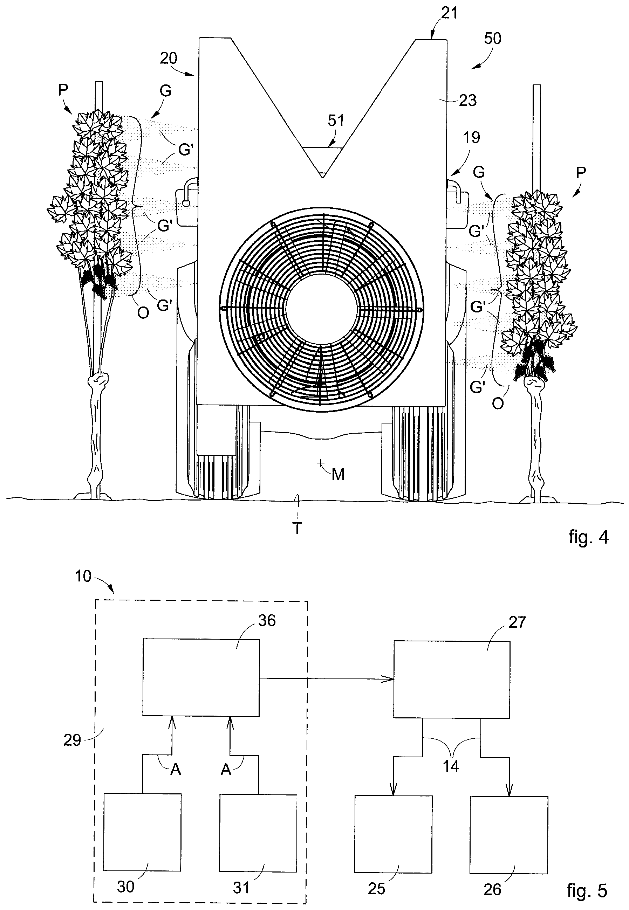

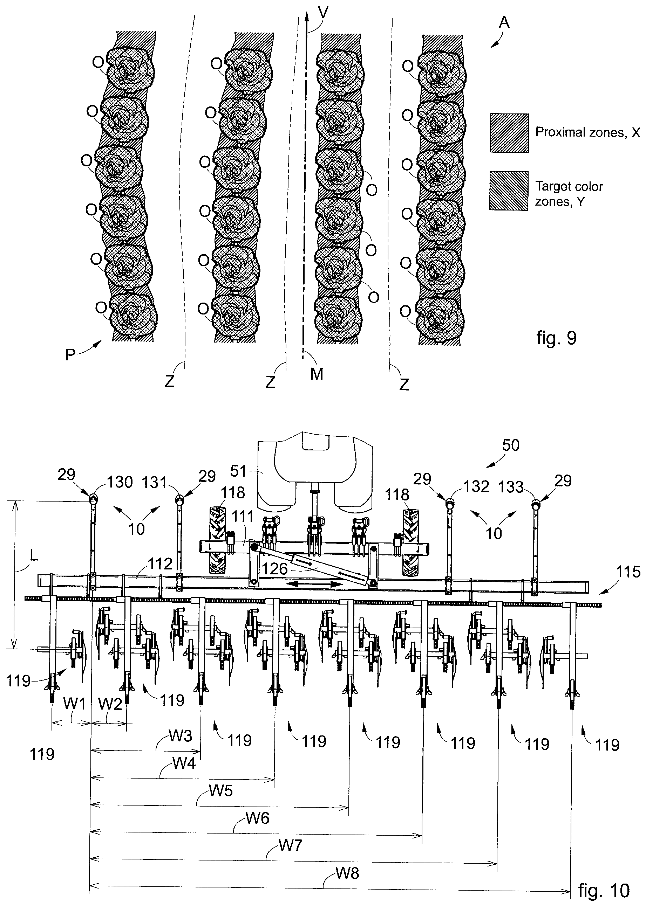

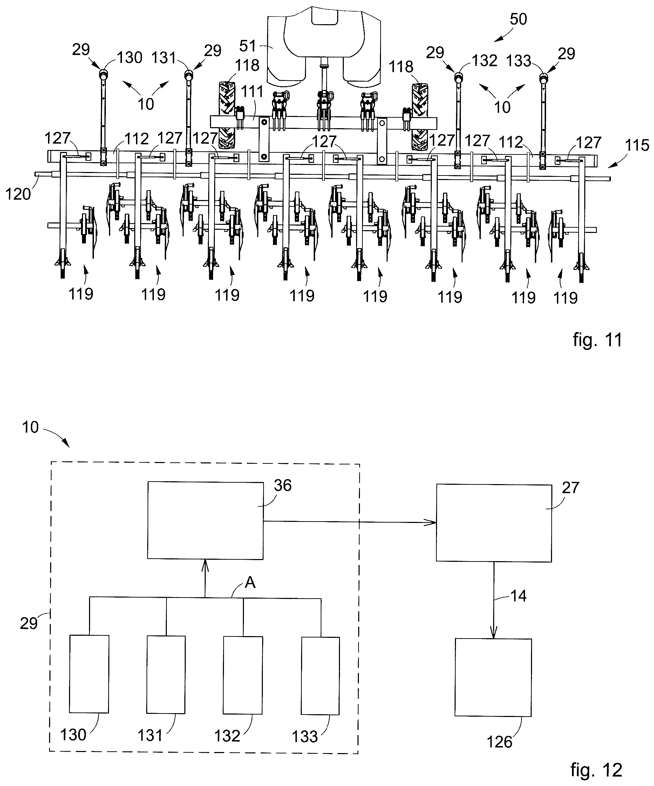

With reference to fig. 2 or 9, an apparatus 10 for recognizing one or more vegetable elements O of a plantation P according to the present invention is suitable to be mounted on an agricultural machine 50 comprising an operating device 15, 115 suitable to perform a treatment on the plantation P, and it is provided with connection means 14 (figs. 5 and 12) configured to connect the apparatus 10 to the operating device 15, 115.

The agricultural machine 50 comprises towing means 51, such as an agricultural tractor for example, to tow the operating device 15, 115 and the apparatus 10 in a direction of travel M with a certain speed V.

In the examples provided here, the apparatus 10 is disposed at the front, that is, upstream, with respect to the operating device 15, 115 in the direction of travel M, and at a certain horizontal distance L (figs. 3 and 10) from the operating device 15, 115.

Furthermore, the operating device 15, 115 in question comprises at least a plurality of operating members 19, 20, 119 and adjustment means 25, 26, 126 to regulate the operation of the operating members 19, 20, 119.

According to one aspect of the present invention, the apparatus 10 comprises recognition means which in this specific case comprise a recognition device 29 provided with at least one optical detector 30, 31, 130, 131, 132, 133 (figs. 1, 2, 10 and 11) configured to acquire a temporal sequence of images A (figs. 6 and 9) of the portion of the plantation P which, during use, is in front of them. The temporal sequence of images A comprises at least one image A.

In one embodiment of the apparatus 10, each optical detector 30, 31, 130, 131, 132, 133 (figs. 1, 2, 10 and 11) comprises a monocular video camera facing the plantation P. The monocular video camera is a monocular video camera capable of detecting colors.

Each monocular video camera is configured to acquire a sequence of images A with a rate that depends on the speed V of displacement of the apparatus 10 and the desired measurement spatial resolution.

By way of a non-limiting example, this rate is preferably comprised between about 5 fps and about 50 fps.

In one possible embodiment, each detector 30, 31, 130, 131, 132, 133 can comprise a 3D video camera, which also faces the plantation P. Each 3D video camera is configured to acquire a temporal sequence of depth images A whose pixels also represent the distance of the 3D video camera from the framed plantation P.

The recognition device 29 also comprises a processing unit, or CPU, 36 (fig. 5 or 12) configured to process the temporal sequence of images A in order to recognize whether one or more vegetable elements O of the plantation P are framed in the images (fig. 6 or 9).

In a special storage module, which can be part of the processing unit 36 or can be external to it, there is stored a series of image processing algorithms which will be described below.

In particular, in the processing unit 36 (fig. 5 or 12) there are stored comparison algorithms to determine the distance between a detector 30, 31 130, 131, 132, 133 and the plantation P framed in the temporal sequence of images A.

The comparison algorithms analyze two images A acquired consecutively and determine the distance between the optical detector 30, 31, 130, 131, 132, 133 that acquired them and the framed plantation P by exploiting the parallax effect, that is, the effect whereby the objects closest to an optical detector 30, 31, 130, 131, 132, 133 seem to move faster than those located in the background, while infinitely distant objects appear practically motionless. These comparison algorithms have the purpose of determining a set of proximal zones X (fig. 6 or 9) of the framed plantation P, whose distance from the optical detector 30, 31, 130, 131, 132, 133 is comprised, for example, between about 200 cm and about 3000 cm.

The comparison algorithms define generic comparison means which are comprised in the recognition device 29 and are configured to determine the distance between the at least one optical detector 30, 31, 130, 131, 132, 133 and the different portions of plantation P framed in the at least one image A in order to determine the set of proximal zones X.

In other words, the comparison algorithms allow a "vertical" recognition of the vegetation present in the plantation P by comparing the images acquired by the color monocular video camera, exploiting the parallax effect.

The comparison algorithms are particularly useful in the case of plantations P which lie and develop in a vertical plane, such as, for example, vines or orchards.

In the processing unit there can also be stored algorithms for detecting the pixels of at least one target color within images A, in order to determine a set of target color zones Y of the framed plantation P.

The pixel detection algorithms define generic pixel detection means which are comprised in the recognition device 29 and are configured to detect at least one target color of the images A in order to determine a set of target color zones Y of the plantation P framed in the images A.

By target color we mean the set of colors similar to the typical real color of the vegetable element O to be recognized with the apparatus 10 of the present invention.

For example, the target color can be green in the case of a salad, beetroot, or other plantation, or red in the case of a radicchio, red flowers, or other plantation, yellow in the case of a plantation of yellow flowers or others, etc.

In addition, in the processing unit 36 there are stored algorithms for determining one or more vegetable elements O configured to determine which are the zones of the framed plantation P that are comprised at least in the set of target color zones Y and, possibly, in the set of proximal zones X.

The determination algorithms define generic determination means which are comprised in the recognition device 29 and are configured to determine which are the zones of the framed plantation P that are comprised at least in the set of target color zones Y and, possibly, in the set of proximal zones X.

The recognition device 29 is also configured to transmit to a control unit 27 the relative position of each of the vegetable elements O with respect to the optical detector 30, 31, 130, 131, 132, 133 which framed them.

The reciprocal position between each operating member 19, 20, 119 of the operating device 15, 115 and the optical detectors 30, 31, 130, 131, 132, 133 of the apparatus 10 is stored in the control unit 27.

In addition, the control unit 27 is configured to be connected to the adjustment devices 25, 26, 126, 127 of the operating device 15, 115 by means of the connection means 14, and to command the adjustment devices 25, 26, 126, 127 as a function of the relative position between the vegetable elements O and the operating members 19, 20, 119.

Below are two examples of an operating device 15, 115 with which an apparatus 10 according to the present invention can be associated. However, a person of skill in the art will easily understand that the apparatus 10 can also be associated with other types of operating device, different from the examples provided below.

In a first example, schematically shown in figs. from 1 to 4, the operating device 15 with which the apparatus 10 is associated is a spraying device comprising a tank 12, mounted on a frame 11 provided with wheels 18 and suitable to contain a liquid solution of an agronomic product. The spraying device 15 also comprises a pump 13 connected to the tank 12 and to two manifolds 16 and 17, each of which is configured to distribute the liquid solution to a respective group of operating members. In this case, each operating member comprises a delivery device 19, 20.

A first manifold 16 is disposed on one side of the apparatus 10 with respect to its direction of travel M and is configured to distribute the liquid solution to a group of first delivery devices 19.

A second manifold 17 is disposed on the opposite side with respect to that on which the first manifold 16 is located, and is configured to distribute the liquid solution to a group of second delivery devices 20.

Each group of delivery devices 19 and 20 is configured to generate a respective jet G (fig. 4) of the liquid solution, which essentially consists of the individual jets G' generated by each delivery device 19 and 20.

Optionally, the apparatus 10 can also comprise an atomization device 21 configured to nebulize, or atomize, the jet G of each group of delivery devices 19, 20. The atomization device 21 comprises a fan 22 associated with a box-shaped body 23, disposed downstream of the two groups of delivery devices 19 and 20, and suitable to convey the flow of air generated by the fan 22 in a direction perpendicular to the direction of travel M and laterally to the apparatus 10.

Each delivery device 19 and 20 can be activated selectively, and independently from the others, by means of a respective adjustment device 25, 26 commanded by the control unit 27 of the apparatus 10. Each adjustment device 25 and 26 can comprise, for example, a solenoid valve.

Alternatively, or in addition, each delivery device 19, 20 can be oriented selectively in space, at least around an axis of rotation, in order to direct the respective jet G'.

At least two first delivery devices 19 are disposed at different heights with respect to the level of the ground T, so that the respective jets G' are able to spray different zones of the plantation P. Similarly, at least two second delivery devices 20 are disposed at different heights with respect to the level of the ground, so that the respective jets G' are able to spray different zones of the plantation P.

In the example provided here, but without this being interpreted as a limitation, the group of first delivery devices 19 comprises respectively six first delivery devices 19 disposed vertically and distanced from each other, and the group of second delivery devices 20 comprises six second delivery devices 20, also disposed vertically and distanced from each other. However, it is clear that the number of delivery devices 19, 20 present in each group can be different from what is described here.

It is also clear that the disposition and orientation in space of the groups of delivery devices 19, 20 can also be different from what is described here, and that these can also be disposed horizontally or inclined.

Advantageously, each group of delivery devices 19 and 20 can deliver a respective jet G which can be divided independently by activating only some delivery devices 19 and 20, so as to be able to adjust the width of the jet G.

For example, in the example in which the operating device is a delivery device 15, the deviations in the vertical direction H1, ... , Hn (fig. 3) between each of the first delivery devices 19 and the first optical detector 30 and, similarly, also the deviations in the vertical direction between each of the second delivery devices 20 and the second optical detector 31 are stored in the control unit 27.

In this case, selection algorithms are also stored in the control unit 27 of the apparatus 10 to select and activate only the delivery devices 19, 20 whose jet G' is capable of spraying a vegetable element O.

To synchronize the activation of the delivery devices 19, 20 with the advance of the apparatus 10 in the direction of travel M, the control unit 27 is configured to detect, in any way, for example using a geo-localization system, or a system connected to the wheels 18, the speed V and the direction of horizontal displacement of the apparatus 10. In fact, the control unit 27 is configured to calculate a delay time corresponding to the time necessary to travel the horizontal distance L at the speed V. Such delay time is the time that elapses between the detection of the vegetable element O and the activation of the delivery devices 19 and 20.

In another example, schematically shown in figs. from 10 to 12, the operating device with which the apparatus 10 according to the present invention is associated is a hoeing device 115 comprising a frame 111 provided with wheels 118 which supports a horizontal beam 112 on which a plurality of operating members are disposed. In this case, each operating member comprises a hoeing member 119.

The hoeing device 115 is suitable to be towed in a direction of travel M and comprises one or more actuator members 127 to move the hoeing members 119 at least in a horizontal direction perpendicular to the direction of travel M.

In particular, in the example of fig. 10, the beam 112 is connected to the frame 111 by means of a parallelogram and an adjustment device 127, commanded by the control unit 27, has one end pivoted to the frame 111 and the other end pivoted to the beam 112. In particular, the adjustment device 127 comprises an actuator member such as, for example, a hydraulic jack.

Alternatively, in the example of fig. 11, the beam 112 is attached to the frame 111 and comprises a guide 120 on which one or more hoeing members 119 are supported sliding by means of respective slides. In this case, the hoeing device 115 comprises one or more adjustment devices 127.

Each adjustment device 127 comprises an actuator member 127 such as, for example, a hydraulic jack, having one end attached to the beam 112 and the other end connected to a respective hoeing member 119 which is commanded, even independently with respect to the others, by the control unit 27 so as to be able to move the respective hoeing member 119 along the slide 120.

In this case, the deviations in horizontal direction W1, ... , Wn (fig. 10) between each hoeing element 19 and each optical detector 130, 131, 132, 133 are stored in the control unit 27. We must clarify that fig. 10 shows only the deviations in horizontal direction between each hoeing element 119 and a single optical detector 130.

In the control unit 27 there are also stored selection algorithms for selecting and activating only the actuator members 126, 127 to position each hoeing member 119 in a position adjacent to the vegetable elements O. For example, the selection algorithms select and activate only the actuator members 126, 127 to position each hoeing member 119 in an intermediate position Z (fig. 9) between two rows of adjacent vegetable elements O.

In this case, in the processing unit 36 of the apparatus 10 there is also stored an ideal seeding pattern, and the algorithms for detecting the pixels of at least one target color are also configured to recognize rows of vegetable elements O.

The ideal seeding pattern comprises a binary image that represents the expected position of the rows of vegetable elements O in an image framed by an optical detector 30, 31, 130, 131, 132, 133, and it is a function of the real seeding geometry of the plantation P, and possibly its vegetative level.

For example, each pixel in the expected position of an element of a row is assigned the value 1 and the other pixels are assigned the value 0.

Furthermore, in this case, the algorithms for detecting the pixels of at least one target color make each image A acquired by each optical detector 30, 31, 130, 131, 132, 133 binary, discriminating each pixel as a function of the target color.

For example, each pixel of the target color is assigned the value 1 and the other pixels are assigned the value 0. The corresponding binary image of an image A is identified as a binary image B.

Then, the algorithms for detecting the pixels of at least one target color calculate the cross-correlation between the ideal seeding pattern and each binary image B.

Finally, the algorithms for detecting the pixels of at least one target color identify what is the virtual displacement that maximizes the cross-correlation function between the ideal seeding pattern and each binary image B. For example, the virtual displacement can be the digital shift of one bit between the ideal seeding pattern and the binary image B.

Once the virtual displacement has been identified, the algorithms for detecting the pixels of at least one target color can estimate the real displacement of the operating members 119 with respect to each identified row.

Also in this case, in order to synchronize the activation of the actuator members 126, 127 with the advance of the apparatus 10 in the direction of travel M, the control unit 27 is configured to detect, in any way, for example by using a geo-localization system, or a system connected to the wheels 118, the speed and direction of the horizontal displacement V of the hoeing device 115.

In fact, the control unit 27 is configured to calculate a delay time corresponding to the time necessary to travel the horizontal distance L at the speed V. This delay time is the time that elapses between the detection of the vegetable element O and the activation of the actuator members 126, 127.

The operation of the apparatus 10 described heretofore, which corresponds to the method according to the present invention, comprises the following steps.

The method provides a preparation step in which an apparatus 10 is associated with an operating device 15, 115 of an agricultural machine 50.

Furthermore, the method provides a travel step in which the apparatus 10 and the operating device 15, 115 are towed parallel to a plantation P.

In this step, the control unit 27 acquires the information relating to the speed V and the direction of displacement of the apparatus 10.

Furthermore, at the same time as the travel step, the method also provides an image acquisition step, in which each optical detector 30, 31, 130, 131, 132, 133 captures a temporal sequence of images A of the plantation P with a cadence, preferably but not necessarily, comprised between about 5 fps and about 50 fps.

In the example in which the operating device is a spraying device 15, a first optical detector 30 faces a first row of the plantation P disposed to the right of the apparatus 10 with respect to the direction of travel M and captures a first temporal sequence S1 of images A. Furthermore, a second optical detector 31 faces a second row of the plantation P disposed to the left of the apparatus 10 with respect to the direction of travel M and captures a second temporal sequence S2 of images A.

Alternatively, in the example in which the operating device is a hoeing device 115, four optical detectors 130, 131, 132, 133 face a respective portion of land. Also in this case, each of the optical detectors 130, 131, 132, 133 captures a respective temporal sequence of images A.

In this image acquisition step, each optical detector 30, 31, 130, 131, 132, 133 transmits the respective temporal sequence S1, S2 of images A to the processing unit 36.

The method also comprises a processing step in which the images A of each temporal sequence S1, S2 of images are processed by the processing unit 36 to determine whether they represent one or more vegetable elements O of the plantation P.

The processing step also comprises a sub-step of evaluating the distance between the plantation P framed in the images A and the optical detector 30, 31, 130, 131, 132, 133 which acquired them, in order to determine a set of proximal zones X.

In particular, during the distance evaluation sub-step, the processing unit 36 compares two images A1 and A2 that show a view of the same portion of plantation P in two consecutive instants in time.

This comparison is aimed at determining how much the different portions of the two consecutive images A1 and A2 have moved with respect to each other during the time elapsed between the two acquisitions by exploiting the parallax effect, that is, the effect whereby the objects closest to an optical detector 30, 31, 130, 131, 132, 133 seem to move faster than those located in the background, while infinitely distant objects appear practically motionless.

In order to estimate the displacements between the different zones of the plantation P framed within a temporal sequence S1, S2 of images A, the technique known in the sector with the English term "block matching" is used, which provides to select a first set of pixels within a first image A1 and to search for the position in the second image A2 in which there is a second set of pixels, which has the same dimensions as the first set and the maximum similarity therewith.

In this specific case, the block matching technique is applied only in a unidirectional neighborhood, for example in a direction parallel to the direction of travel M, of the first set of pixels, thus limiting the number of comparisons to be made and therefore the computing power required of the processing unit 36.

The sets of pixels that appear to have moved more between the first image A1 and the second image A2 represent the set of proximal zones X of the framed plantation P.

This information, together with the information on the displacement of the apparatus 10 during the acquisition time elapsed between the two images A1 and A2 being compared, also allows to estimate the distance of the set of proximal zones X from the optical detector 30, 31, 130, 131, 132, 133.

This distance evaluation sub-step would not be performed if the camera was of the 3D type, since the latter would be able to directly provide the information relating to the distance between it and the plantation P framed.

The processing step also comprises a color evaluation sub-step in which the processing unit 36 detects the pixels of the target color within the images A, in order to determine a set of target color zones Y of the framed plantation P.

In the embodiments in which the vegetable elements O of the plantation P are normally disposed in rows, for example, in the second example of operating device 115, the color evaluation step also provides to recognize the presence and position of the rows of vegetable elements O.

In particular, each pixel of the at least one target color in each image A acquired by each optical detector 30, 31, 130, 131, 132, 133 is assigned the value 1, while the other pixels are assigned the value 0, thus generating a binary image B.

This binary image B is then compared with an ideal seeding pattern which comprises a binary image that represents the expected position of the rows of vegetable elements O in an image framed by an optical detector 30, 31, 130, 131, 132, 133. For example, each pixel in the expected position of an element in a row is assigned the value 1.

Then, the cross-correlation between the ideal seeding pattern and each binary image B is calculated.

Finally, the virtual displacement that maximizes the cross-correlation function between the ideal seeding pattern and each binary image B is identified. For example, the virtual displacement can be the digital shift of one bit between the ideal seeding pattern and the binary image B.

From the virtual displacement, the real displacement of each operating member 119 of the operating device 115 with respect to each identified row is estimated.

The processing step can also provide a sub-step of determining one or more vegetable elements O of the framed plantation P, in which the processing unit 36 determines which are the zones of the plantation P comprised at least in the set of target color zones Y and, possibly, in the set of proximal zones X.

In this case, the zones of the framed plantation P comprised at least in the set of proximal zones X and in the set of target color zones Y correspond to the vegetable elements O.

The method also provides a step of activating the adjustment devices 25, 26, 126, 27 in order to move and/or activate the operating members 19, 20, 119 as a function of the position of the vegetable elements O which will appear in front of them.

For example, in the example in which the operating device is a spraying device 15, this activation step comprises a selection sub-step in which the control unit 27 determines which are the delivery devices 19, 20 that deliver a jet G' that is capable of spraying the next vegetable element O which will appear in front of them.

Furthermore, in this example, the activation step also provides a delivery sub-step in which the control unit 27 activates, through the adjustment devices 25, 26, only the delivery devices 19, 20 selected in the selection step.

Between the acquisition step and the delivery step a certain delay time elapses, which is substantially equal to the time necessary to travel the horizontal distance L at the speed V.

Alternatively, in the example in which the operating device is a hoeing device 115, this activation step comprises a selection sub-step in which the control unit 27 determines which are the actuator members 126, 127 to be activated in order to position a hoeing member 119 in an intermediate position Z between two rows of adjacent vegetable elements O.

Furthermore, in this embodiment, the activation step also provides a movement sub-step in which the control unit 27 activates the actuator members 126, 127 selected in the selection step.

Please note that the image acquisition step and the activation step are carried out continuously in order to manage the operation of the operating members 19, 20, 119 as a function of the portion of the plantation P which appears in front of them on each occasion.

It is clear that modifications and/or additions of parts or steps may be made to the apparatus 10 and to the method as described heretofore, without departing from the field and scope of the present invention, as defined by the claims.

It is also clear that, although the present invention has been described with reference to some specific examples, a person of skill in the art shall certainly be able to achieve many other equivalent forms of an apparatus and of a method for recognizing one or more vegetable elements of a plantation, and of an agricultural machine comprising such apparatus having the characteristics as set forth in the claims and hence all coming within the field of protection defined thereby.

In the following claims, the sole purpose of the references in brackets is to facilitate their reading and they must not be considered as restrictive factors with regard to the field of protection defined by the same claims.

## Claims

1. Apparatus (10) for recognizing one or more vegetable elements (O) of a plantation (P), provided with connection means (14) configured to connect said apparatus (10) to an operating device (15, 115) having both a plurality of operating members (19, 20, 119) to carry out at least one work on said plantation (P), and also adjustment means (25, 26, 126, 127) configured to drive said operating members (19, 20, 119), said apparatus (10) comprises recognition means (29) configured to recognize, instant by instant, both the position and also the volume of said one or more vegetable elements (O), and a control unit (27) connected to said recognition means (29) and configured to selectively command said adjustment means (25, 26, 126, 127) as a function of the relative position between said one or more vegetable elements (O) and said operating members (19, 20, 119) and of the volume of said one or more vegetable elements (O),
wherein said recognition means (29) comprise at least one optical detector (30, 31, 130, 131, 132, 133) configured to acquire at least one image (A) of said plantation (P), and at least one processing unit (36) configured to process said at least one image (A),
**characterised in that** in said processing unit (36) there are stored comparison algorithms configured to determine the distance between said at least one optical detector (30, 31, 130, 131, 132, 133) and the different portions of said plantation (P) framed in said at least one image (A), by exploiting the parallax effect by analyzing two images (A) acquired consecutively, and to determine a set of proximal zones (X) of said framed plantation (P), whose distance from the optical detector is comprised, said parallax effect being the effect whereby the objects closest to said at least one optical detector (30, 31, 130, 131, 132, 133) seem to move faster than those located in the background, while infinitely distant objects appear practically motionless,
wherein said at least one optical detector (30, 31, 130, 131, 132, 133) comprises at least one monocular video camera.

2. Apparatus (10) as in claim 1, **characterized in that** in said processing unit (36) there are stored algorithms for detecting the pixels of at least one target color of said at least one image (A) which are configured to determine a set of zones of said target color (Y) of said plantation (P) framed in said at least one image (A).

3. Apparatus (10) as in claim 2, **characterized in that** said at least one target color comprises at least the typical real color of said one or more vegetable elements (O).

4. Apparatus (10) as in either claim 2 or 3, **characterized in that** in said processing unit (36) there are stored algorithms for determining said one or more vegetable elements (O) which are configured to determine which are the zones of said plantation (P) framed in said at least one image (A) which are comprised in said set of zones of said target color (Y) and, possibly, in said set of proximal zones (X).

5. Apparatus (10) as in claim 2, 3 or 4, **characterized in that** in said processing unit (36) there are stored definition algorithms configured to define said one or more vegetable elements (O) comprised in an intersection between said set of proximal zones (X) and said set of zones of said target color (Y).

6. Apparatus (10) as in any claim from 1 to 5, **characterized in that** said at least one optical detector (30, 31, 130, 131, 132, 133) comprises at least one color monocular video camera.

7. Agricultural machine (50) comprising said operating device (15, 115) having said plurality of operating members (19, 20, 119) to carry out at least one work on a plantation (P) and said adjustment means (25, 26, 126, 127) configured to drive said operating members (19, 20, 119), **characterized in that** it also comprises an apparatus (10) for recognizing, instant by instant, the position and the volume of one or more vegetable elements (O) of said plantation (P) as in any claim hereinbefore.

8. Agricultural machine (50) as in claim 7, in which said operating members (19, 20) comprise a plurality of delivery devices which can be selectively activated to deliver a jet (G') of a liquid solution on said plantation (P) and said adjustment means (25, 26) are configured to selectively activate each of said delivery devices independently of each other, **characterized in that** said control unit (27) is configured to command said adjustment means (25, 26) in such a way as to activate only the delivery devices of said plurality of delivery devices whose jet (G') is capable of spraying said one or more vegetable elements (O) as a function of their position and of their volume.

9. Agricultural machine (50) as in claim 7, in which said operating members (119) comprise at least one associated hoeing member and said adjustment means (126, 127) are configured to selectively move said at least one hoeing member, **characterized in that** said control unit (27) is configured to command said adjustment means (126, 127) to selectively position said at least one hoeing member in a position adjacent to at least one of said vegetable elements (O).

10. Agricultural machine (70) as in claim 9, **characterized in that** said control unit (27) is configured to command said adjustment means (126, 127) in such a way as to position said at least one hoeing member in an intermediate position (Z) between two adjacent rows of said vegetable elements (O).

11. Method for recognizing one or more vegetable elements (O) of a plantation (P), wherein it comprises the following steps:
- a travel step in which an agricultural machine (50) is made to transit in the proximity of said plantation (P), said agricultural machine (50) comprising both an operating device (15, 115) having a plurality of operating members (19, 20, 119) to carry out at least one work on said plantation (P) and adjustment means (25, 26, 126, 127) configured to drive said operating members (19, 20, 119), and also an apparatus (10) comprising recognition means (29) configured to recognize, instant by instant, both the position and also the volume of one or more vegetable elements (O) of said plantation (P), and a control unit (27) connected to said recognition means (29) and to said adjustment means (25, 26, 126, 127) to command the latter as a function of the relative position between said one or more vegetable elements (O) and said operating members (19, 20, 119) and of the volume of said one or more vegetable elements (O);
- an image acquisition step in which at least one image (A) of said plantation (P) is acquired by means of at least one optical detector (30, 31, 130, 131, 132, 133) connected to said control unit (27) wherein said at least one optical detector (30, 31, 130, 131, 132, 133) comprises at least one monocular video camera;
- a step of processing said at least one image (A) to determine whether at least one of said one or more vegetable elements (O) is framed therein wherein the processing step comprises a sub-step of evaluating the distance between the zones of said plantation (P) framed in said at least one image (A) and the corresponding optical detector (30, 31, 130, 131, 132, 133) which has acquired said at least one image (A) by exploiting the parallax effect by analyzing two images (A) acquired consecutively and to determine a set of proximal zones (X) of said framed plantation (P), whose distance from the optical detector is comprised,
said parallax effect being the effect whereby the objects closest to said at least one optical detector (30, 31, 130, 131, 132, 133) seem to move faster than those located in the background, while infinitely distant objects appear practically motionless;
- an activation step in which said adjustment means (25, 26, 126, 127) are activated to drive said operating members (19, 20, 119) as a function of the position of said one or more vegetable elements (O).

12. Method as in claim 11, **characterized in that** said processing step comprises at least the following sub-steps:
- a sub-step of detecting the pixels of at least one target color within said at least one image (A) in order to determine a set of zones of said target color (Y);
- a sub-step of defining at least one of said one or more vegetable elements (O) which comprise at least one intersection between said set of proximal zones (X) and said set of zones of said target color (Y).

13. Method as in claim 11 or 12, wherein said operating members (19, 20) comprise a plurality of delivery devices which can be selectively activated to deliver a jet (G') of a liquid solution on said plantation (P) and said adjustment means (25, 26) are configured to selectively activate each of said delivery devices independently of each other, **characterized in that** said activation step comprises a delivery sub-step in which said control unit (27) commands said adjustment means (25, 26, 126, 127) to activate only the delivery devices of said plurality of delivery devices whose jet (G) is capable of spraying said one or more vegetable elements (O) as a function of their position and of their volume.

14. Method as in claim 12 and wherein said operating members (119) comprise at least one hoeing member and wherein said adjustment means (126, 127) are configured to move said at least one hoeing member, **characterized in that** said activation step comprises a movement sub-step in which said control unit (27) commands said adjustment means (126, 127) to position said at least one hoeing member in a position adjacent to at least one of said vegetable elements (O).

## Patentansprüche

1. Vorrichtung (10) zur Erkennung eines oder mehrerer pflanzlicher Elemente (O) einer Plantage (P), die mit Verbindungsmitteln (14), die dazu eingerichtet sind, die Vorrichtung (10) mit einer Betriebsvorrichtung (15, 115) zu verbinden, die beide eine Vielzahl von Betriebselementen (19, 20, 119) haben, um zumindest eine Arbeit an der genannten Plantage (P) durchzuführen, und auch mit Einstellungsmitteln (25, 26, 126, 127) versehen ist, die dazu eingerichtet sind, die Betriebselemente (19, 20, 119) anzutreiben, wobei die Vorrichtung (10) Erkennungsmittel (29), die dazu eingerichtet sind, augenblicksweise sowohl die Stellung als auch das Volumen des einen oder der mehreren pflanzlichen Elemente (O) zu erkennen, und eine Steuerungseinheit (27) umfasst, die mit den Erkennungsmitteln (29) verbunden ist und dazu eingerichtet ist, die Einstellungsmittel (25, 26, 126, 127) in Abhängigkeit von der relativen Stellung zwischen dem einen oder den mehreren pflanzlichen Elementen (O) und den Betriebselementen (19, 20, 119) und von dem Volumen des einen oder der mehreren pflanzlichen Elemente (O) selektiv zu steuern,
worin die Erkennungsmittel (29) zumindest einen optischen Detektor (30, 31, 130, 131, 132, 133), der dazu eingerichtet ist, zumindest ein Bild (A) der genannten Plantage (P) zu erfassen, und zumindest eine Verarbeitungseinheit (36) umfassen, die dazu eingerichtet ist, das zumindest eine Bild (A) zu verarbeiten,
**dadurch gekennzeichnet, dass** es in der Verarbeitungseinheit (36) Vergleichsalgorithmen gespeichert sind, die dazu eingerichtet sind, den Abstand zwischen dem zumindest einen optischen Detektor (30, 31, 130, 131, 132, 133) und den verschiedenen Abschnitten der genannten Plantage (P), die in dem zumindest einen Bild (A) gerahmt sind, durch Ausnutzung des Parallaxeneffektes durch Analyse von zwei nacheinander erfassten Bildern (A) zu bestimmen, und einen Satz von proximalen Bereichen (X) der gerahmten Plantage (P) zu bestimmen, deren Abstand vom optischen Detektor umfasst ist, wobei der genannte Parallaxeneffekt der Effekt ist, mittels dessen es scheint, dass die Gegenstände, die dem zumindest einen optischen Detektor (30, 31, 130, 131, 132, 133) am nächsten sind, sich schneller bewegen als diejenigen, die im Hintergrund gelegen sind, während unendlich entfernte Gegenstände praktisch bewegungslos erscheinen,
worin der zumindest eine optische Detektor (30, 31, 130, 131, 132, 133) zumindest eine monokulare Videokamera umfasst.

2. Vorrichtung (10) nach Anspruch 1, **dadurch gekennzeichnet, dass** es in der Verarbeitungseinheit (36) Algorithmen zum Detektieren der Pixel von zumindest einer Zielfarbe vom genannten zumindest einen Bild (A) gespeichert sind, die dazu eingerichtet sind, einen Satz von Bereichen der Zielfarbe (Y) der genannten Plantage (P), die in dem zumindest einen Bild (A) gerahmt sind, zu bestimmen.

3. Vorrichtung (10) nach Anspruch 2, **dadurch gekennzeichnet, dass** die genannte zumindest eine Zielfarbe zumindest die typische tatsächliche Farbe des einen oder der mehreren pflanzlichen Elemente (O) umfasst.

4. Vorrichtung (10) nach einem der Ansprüche 2 oder 3, **dadurch gekennzeichnet, dass** es in der Verarbeitungseinheit (36) Algorithmen zum Bestimmen des einen oder der mehreren pflanzlichen Elemente (O) gespeichert sind, die dazu eingerichtet sind, zu bestimmen, welche die Bereiche der Plantage (P) sind, die in dem zumindest einen Bild (A) gerahmt sind, die in dem Satz von Bereichen der Zielfarbe (Y) und, möglicherweise, in dem Satz von proximalen Bereichen (X) umfasst sind.

5. Vorrichtung (10) nach Anspruch 2, 3 oder 4, **dadurch gekennzeichnet, dass** es in der Verarbeitungseinheit (36) Definitionsalgorithmen gespeichert sind, die dazu eingerichtet sind, das eine oder die mehreren pflanzlichen Elemente (O) zu definieren, die in einem Durchschnitt zwischen dem Satz von proximalen Bereichen (X) und dem Satz von Bereichen der Zielfarbe (Y) umfasst sind.

6. Vorrichtung (10) nach einem der Ansprüche 1 bis 5, **dadurch gekennzeichnet, dass** der zumindest eine optische Detektor (30, 31, 130, 131, 132, 133) zumindest eine monokulare Farbvideokamera umfasst.

7. Landwirtschaftliche Maschine (50) umfassend die genannte Betriebsvorrichtung (15, 115), die die genannte Vielzahl von Betriebselementen (19, 20, 119) hat, um zumindest eine Arbeit an einer Plantage (P) durchzuführen, und die genannten Einstellungsmittel (25, 26, 126, 127), die dazu eingerichtet sind, die genannten Betriebselemente (19, 20, 119) anzutreiben, **dadurch gekennzeichnet, dass** sie auch eine Vorrichtung (10) zum Erkennen, augenblicksweise, der Stellung und des Volumens des einen oder der mehreren pflanzlichen Elemente (O) der Plantage (P) nach einem der vorhergehenden Ansprüche umfasst.

8. Landwirtschaftliche Maschine (50) nach Anspruch 7, in der die genannten Betriebselemente (19, 20) eine Vielzahl von Liefervorrichtungen umfassen, die selektiv betätigt werden können, um einen Strahl (G') einer flüssigen Lösung über die genannte Plantage (P) zu liefern, und die genannten Einstellungsmittel (25, 26) dazu eingerichtet sind, jede von den Liefervorrichtungen unabhängig voneinander selektiv zu betätigen, **dadurch gekennzeichnet, dass** die Steuerungseinheit (27) dazu eingerichtet ist, die Einstellungsmittel (25, 26) derart zu steuern, dass nur die Liefervorrichtungen von der Vielzahl von Liefervorrichtungen betätigt werden, deren Strahl (G') das genannte eine oder die mehreren pflanzlichen Elemente (O) in Abhängigkeit von ihrer Stellung und ihrem Volumen besprühen kann.

9. Landwirtschaftliche Maschine (50) nach Anspruch 7, in der die genannten Betriebselemente (119) zumindest ein zugehöriges Hackerelement umfassen und die genannten Einstellungsmittel (126, 127) dazu eingerichtet sind, das genannte zumindest eine Hackerelement selektiv zu bewegen, **dadurch gekennzeichnet, dass** die genannte Steuerungseinheit (27) dazu eingerichtet ist, die genannten Einstellungsmittel (126, 127) so zu steuern, damit sie das genannte zumindest eine Hackerelement in einer Stellung, die an zumindest eines der genannten pflanzlichen Elemente (O) angrenzend ist, selektiv positionieren.

10. Landwirtschaftliche Maschine (70) nach Anspruch 9, **dadurch gekennzeichnet, dass** die genannte Steuerungseinheit (27) dazu eingerichtet ist, die genannten Einstellungsmittel (126, 127) so zu steuern, damit sie das genannte zumindest eine Hackerelement in einer Zwischenstellung (Z) zwischen zwei angrenzenden Reihen der genannten pflanzlichen Elemente (O) positionieren.

11. Verfahren zum Erkennen eines oder mehrerer pflanzlicher Elemente (O) einer Plantage (P), worin es die folgenden Schritte umfasst:
- einen Fahrschritt, in dem eine landwirtschaftliche Maschine (50) in der Nähe der Plantage (P) gefahren wird, wobei die landwirtschaftliche Maschine (50) sowohl eine Betriebsvorrichtung (15, 115), die eine Vielzahl von Betriebselementen (19, 20, 119), um zumindest eine Arbeit an der genannten Plantage (P) durchzuführen, und Einstellungsmittel (25, 26, 126, 127) hat, die dazu eingerichtet sind, die Betriebselemente (19, 20, 119) anzutreiben, als auch eine Vorrichtung (10) umfasst, welche Erkennungsmittel (29) umfasst, die dazu eingerichtet sind, augenblicksweise sowohl die Stellung als auch das Volumen des einen oder der mehreren pflanzlichen Elemente (O) der genannten Plantage (P) zu erkennen, und eine Steuerungseinheit (27) umfasst, die mit den Erkennungsmitteln (29) und den Einstellungsmitteln (25, 26, 126, 127) verbunden ist, um die letztgenannten in Abhängigkeit von der relativen Stellung zwischen dem einen oder den mehreren pflanzlichen Elementen (O) und den Betriebselementen (19, 20, 119) und von dem Volumen des einen oder der mehreren pflanzlichen Elemente (O) zu steuern;
- einen Bilderfassungsschritt, in dem zumindest ein Bild (A) der genannten Plantage (P) mittels eines zumindest einen optischen Detektors (30, 31, 130, 131, 132, 133) erfasst wird, der mit der Steuerungseinheit (27) verbunden ist, worin der zumindest eine optische Detektor (30, 31, 130, 131, 132, 133) zumindest eine monokulare Videokamera umfasst;
- einen Schritt der Verarbeitung des zumindest einen Bildes (A), um zu bestimmen, ob zumindest eines des genannten einen oder der genannten mehreren pflanzlichen Elemente (O) darin gerahmt ist, worin der Verarbeitungsschritt einen Unterschritt des Einschätzens des Abstands zwischen den Bereichen der genannten Plantage (P), die in dem zumindest einen Bild (A) gerahmt sind, und dem entsprechenden optischen Detektor (30, 31, 130, 131, 132, 133), der das genannte zumindest eine Bild (A) durch Ausnutzung des Parallaxeneffektes durch Analyse von zwei nacheinander erfassten Bildern (A) erfasst hat, und um einen Satz von proximalen Bereichen (X) der gerahmten Plantage (P) zu bestimmen, deren Abstand vom optischen Detektor umfasst ist,
wobei der genannte Parallaxeneffekt der Effekt ist, mittels dessen es scheint, dass die Gegenstände, die dem zumindest einen optischen Detektor (30, 31, 130, 131, 132, 133) am nächsten sind, sich schneller bewegen als diejenigen, die im Hintergrund gelegen sind, während unendlich entfernte Gegenstände praktisch bewegungslos erscheinen;
- einen Betätigungsschritt, in dem die genannten Einstellungsmittel (25, 26, 126, 127) betätigt sind, um die genannten Betriebselemente (19, 20, 119) in Abhängigkeit von der Stellung des einen oder der mehreren pflanzlichen Elemente (O) anzutreiben.

12. Verfahren nach Anspruch 11, **dadurch gekennzeichnet, dass** der Verarbeitungsschritt zumindest die folgenden Teilschritte umfasst:
- einen Teilschritt des Detektierens der Pixel von zumindest einer Zielfarbe innerhalb des genannten zumindest einen Bildes (A), um einen Satz von Bereichen der Zielfarbe (Y) zu bestimmen;
- einen Teilschritt des Definierens zumindest eines des genannten einen oder der genannten mehreren pflanzlichen Elemente (O), die zumindest einen Durchschnitt zwischen dem Satz von proximalen Bereichen (X) und dem Satz von Bereichen der Zielfarbe (Y) umfassen.

13. Verfahren nach Anspruch 11 oder 12, worin die genannten Betriebselemente (19, 20) eine Vielzahl von Liefervorrichtungen umfassen, die selektiv betätigt werden können, um einen Strahl (G') einer flüssigen Lösung über die genannte Plantage (P) zu liefern, und die genannten Einstellungsmittel (25, 26) dazu eingerichtet sind, jede von den Liefervorrichtungen unabhängig voneinander selektiv zu betätigen, **dadurch gekennzeichnet, dass** der Betätigungsschritt einen Lieferungs-Teilschritt umfasst, in dem die Steuerungseinheit (27) die Einstellungsmittel (25, 26, 126, 127) steuert, um nur die Liefervorrichtungen von der Vielzahl von Liefervorrichtungen zu betätigen, deren Strahl (G) das genannte eine oder die mehreren pflanzlichen Elemente (O) in Abhängigkeit von ihrer Stellung und ihrem Volumen besprühen kann.

14. Verfahren nach Anspruch 12 und worin die genannten Betriebselemente (119) zumindest ein zugehöriges Hackerelement umfassen und worin die genannten Einstellungsmittel (126, 127) dazu eingerichtet sind, das genannte zumindest eine Hackerelement zu bewegen, **dadurch gekennzeichnet, dass** der Betätigungsschritt einen Bewegungs-Teilschritt umfasst, in dem die genannte Steuerungseinheit (27) die genannten Einstellungsmittel (126, 127) steuert, damit sie das genannte zumindest eine Hackerelement in einer Stellung, die an zumindest eines der genannten pflanzlichen Elemente (O) angrenzend ist, positionieren.

## Revendications

1. Appareil (10) destiné à reconnaître un ou plusieurs éléments végétaux (O) d'une plantation (P), muni de moyens de connexion (14) configurés pour connecter ledit appareil (10) à un dispositif fonctionnel (15, 115) présentant à la fois une pluralité d'organes fonctionnels (19, 20, 119) destinés à effectuer au moins un travail sur ladite plantation (P), et également des moyens de réglage (25, 26, 126, 127) configurés pour entraîner lesdits organes fonctionnels (19, 20, 119), ledit appareil (10) comprend des moyens de reconnaissance (29) configurés pour reconnaître, instant par instant, à la fois la position et également le volume desdits un ou plusieurs éléments végétaux (O), et une unité de commande (27) connectée auxdits moyens de reconnaissance (29) et configurée pour commander sélectivement lesdits moyens de réglage (25, 26, 126, 127) en fonction de la position relative entre lesdits un ou plusieurs éléments végétaux (O) et lesdits organes fonctionnels (19, 20, 119) et du volume desdits un ou plusieurs éléments végétaux (O),
dans lequel lesdits moyens de reconnaissance (29) comprennent au moins un détecteur optique (30, 31, 130, 131, 132, 133) configuré pour acquérir au moins une image (A) de ladite plantation (P), et au moins une unité de traitement (36) configurée pour traiter ladite au moins une image (A),
**caractérisé en ce que** dans ladite unité de traitement (36) sont stockés des algorithmes de comparaison configurés pour déterminer la distance entre ledit au moins un détecteur optique (30, 31, 130, 131, 132, 133) et les différentes parties de ladite plantation (P) définies dans ladite au moins une image (A), en exploitant l'effet de parallaxe en analysant deux images (A) acquises consécutivement, et pour déterminer un ensemble de zones proximales (X) de ladite plantation définie (P), dont une distance au détecteur optique est comprise, ledit effet de parallaxe étant l'effet selon lequel les objets les plus proches dudit au moins un détecteur optique (30, 31, 130, 131, 132, 133) semblent se déplacer plus rapidement que ceux situés en arrière-plan, en même temps que des objets infiniment lointains semblent pratiquement immobiles,
dans lequel ledit au moins un détecteur optique (30, 31, 130, 131, 132, 133) comprend au moins une caméra vidéo monoculaire.

2. Appareil (10) selon la revendication 1, **caractérisé en ce que** dans ladite unité de traitement (36) sont stockés des algorithmes pour détecter les pixels d'au moins une couleur cible de ladite au moins une image (A) qui sont configurés pour déterminer un ensemble de zones de ladite couleur cible (Y) de ladite plantation (P) définie dans ladite au moins une image (A).

3. Appareil (10) selon la revendication 2, **caractérisé en ce que** ladite au moins une couleur cible comprend au moins la couleur réelle classique desdits un ou plusieurs éléments végétaux (O).

4. Appareil (10) selon soit la revendication 2, soit la revendication 3, **caractérisé en ce que** dans ladite unité de traitement (36) sont stockés des algorithmes pour déterminer lesdits un ou plusieurs éléments végétaux (O) qui sont configurés pour déterminer quelles sont les zones de ladite plantation (P), définie dans ladite au moins une image (A), qui sont comprises dans ledit ensemble de zones de ladite couleur cible (Y) et, éventuellement, dans ledit ensemble de zones proximales (X).

5. Appareil (10) selon la revendication 2, 3 ou 4, **caractérisé en ce que** dans ladite unité de traitement (36) sont stockés des algorithmes de définition configurés pour définir lesdits un ou plusieurs éléments végétaux (O) compris dans un recoupement dudit ensemble de zones proximales (X) et dudit ensemble de zones de ladite couleur cible (Y).

6. Appareil (10) selon l'une quelconque des revendications 1 à 5, **caractérisé en ce que** ledit au moins un détecteur optique (30, 31, 130, 131, 132, 133) comprend au moins une caméra vidéo monoculaire couleur.

7. Engin agricole (50) comprenant ledit dispositif fonctionnel (15, 115) présentant ladite pluralité d'organes fonctionnels (19, 20, 119) destinés à effectuer au moins un travail sur une plantation (P) et lesdits moyens de réglage (25, 26, 126, 127) configurés pour entraîner lesdits organes fonctionnels (19, 20, 119), **caractérisé en ce qu'**il comprend également un appareil (10) pour reconnaître, instant par instant, la position et le volume d'un ou plusieurs éléments végétaux (O) de ladite plantation (P) selon une quelconque revendication précédente.

8. Engin agricole (50) selon la revendication 7, dans lequel lesdits organes fonctionnels (19, 20) comprennent une pluralité de dispositifs de distribution qui peuvent être activés sélectivement pour distribuer un jet (G') d'une solution liquide sur ladite plantation (P) et lesdits moyens de réglage (25, 26) sont configurés pour activer sélectivement chacun desdits dispositifs de distribution indépendamment les uns des autres, **caractérisé en ce que** ladite unité de commande (27) est configurée pour commander lesdits moyens de réglage (25, 26) de manière à n'activer que les dispositifs de distribution de ladite pluralité de dispositifs de distribution dont le jet (G') est apte à pulvériser lesdits un ou plusieurs éléments végétaux (O) en fonction de leur position et de leur volume.

9. Engin agricole (50) selon la revendication 7, dans lequel lesdits organes fonctionnels (119) comprennent au moins un organe de sarclage associé et lesdits moyens de réglage (126, 127) sont configurés pour déplacer sélectivement ledit au moins un organe de sarclage, **caractérisé en ce que** ladite unité de commande (27) est configurée pour commander lesdits moyens de réglage (126, 127) pour positionner sélectivement ledit au moins un organe de sarclage dans une position adjacente à au moins l'un desdits éléments végétaux (O).

10. Engin agricole (70) selon la revendication 9, **caractérisé en ce que** ladite unité de commande (27) est configurée pour commander lesdits moyens de réglage (126, 127) de manière à positionner ledit au moins un organe de sarclage dans une position intermédiaire (Z) entre deux rangées adjacentes desdits éléments végétaux (O).

11. Procédé de reconnaissance d'un ou plusieurs éléments végétaux (O) d'une plantation (P), dans lequel il comprend les étapes suivantes :
- une étape de déplacement dans laquelle un engin agricole (50) est amené à transiter à proximité de ladite plantation (P), ledit engin agricole (50) comprenant à la fois un dispositif fonctionnel (15, 115) présentant une pluralité d'organes fonctionnels (19, 20, 119) destinés à effectuer au moins un travail sur ladite plantation (P) et des moyens de réglage (25, 26, 126, 127) configurés pour entraîner lesdits organes fonctionnels (19, 20, 119), ainsi qu'un appareil (10) comprenant des moyens de reconnaissance (29) configurés pour reconnaître, instant par instant, à la fois la position et également le volume d'un ou plusieurs éléments végétaux (O) de ladite plantation (P), et une unité de commande (27) connectée auxdits moyens de reconnaissance (29) et auxdits moyens de réglage (25, 26, 126, 127) pour commander ces derniers en fonction de la position relative entre lesdits un ou plusieurs éléments végétaux (O) et lesdits organes fonctionnels (19, 20, 119) et du volume desdits un ou plusieurs éléments végétaux (O) ;
- une étape d'acquisition d'image dans laquelle au moins une image (A) de ladite plantation (P) est acquise au moyen d'au moins un détecteur optique (30, 31, 130, 131, 132, 133) connecté à ladite unité de commande (27), dans lequel ledit au moins un détecteur optique (30, 31, 130, 131, 132, 133) comprend au moins une caméra vidéo monoculaire ;
- une étape de traitement de ladite au moins une image (A) pour déterminer si au moins l'un desdits un ou plusieurs éléments végétaux (O) est défini dans celle-ci, dans lequel l'étape de traitement comprend une sous-étape d'évaluation de la distance entre les zones de ladite plantation (P) définie dans ladite au moins une image (A) et le détecteur optique correspondant (30, 31, 130, 131, 132, 133) qui a acquis ladite au moins une image (A) en exploitant l'effet de parallaxe en analysant deux images (A) acquises consécutivement et pour déterminer un ensemble de zones proximales (X) de ladite plantation définie (P), dont la distance au détecteur optique est comprise,
ledit effet de parallaxe étant l'effet selon lequel les objets les plus proches dudit au moins un détecteur optique (30, 31, 130, 131, 132, 133) semblent se déplacer plus rapidement que ceux situés en arrière-plan, en même temps que les objets infiniment lointains semblent pratiquement immobiles ;
- une étape d'activation dans laquelle lesdits moyens de réglage (25, 26, 126, 127) sont activés pour entraîner lesdits organes fonctionnels (19, 20, 119) en fonction de la position desdits un ou plusieurs éléments végétaux (O).

12. Procédé selon la revendication 11, **caractérisé en ce que** ladite étape de traitement comprend au moins les sous-étapes suivantes :
- une sous-étape de détection des pixels d'au moins une couleur cible au sein de ladite au moins une image (A) afin de déterminer un ensemble de zones de ladite couleur cible (Y) ;
- une sous-étape de définition d'au moins l'un desdits un ou plusieurs éléments végétaux (O) qui comprend au moins un recoupement entre ledit ensemble de zones proximales (X) et ledit ensemble de zones de ladite couleur cible (Y).

13. Procédé selon la revendication 11 ou 12, dans lequel lesdits organes fonctionnels (19, 20) comprennent une pluralité de dispositifs de distribution qui peuvent être activés sélectivement pour distribuer un jet (G') d'une solution liquide sur ladite plantation (P) et lesdits moyens de réglage (25, 26) sont configurés pour activer sélectivement chacun desdits dispositifs de distribution indépendamment les uns des autres, **caractérisé en ce que** ladite étape d'activation comprend une sous-étape de distribution dans laquelle ladite unité de commande (27) commande lesdits moyens de réglage (25, 26, 126, 127) pour n'activer que les dispositifs de distribution de ladite pluralité de dispositifs de distribution dont le jet (G) est apte à pulvériser lesdits un ou plusieurs éléments végétaux (O) en fonction de leur position et de leur volume.

14. Procédé selon la revendication 12 et dans lequel lesdits organes fonctionnels (119) comprennent au moins un organe de sarclage et dans lequel lesdits moyens de réglage (126, 127) sont configurés pour déplacer ledit au moins un organe de sarclage, **caractérisé en ce que** ladite étape d'activation comprend une sous-étape de déplacement dans laquelle ladite unité de commande (27) commande lesdits moyens de réglage (126, 127) pour positionner ledit au moins un organe de sarclage dans une position adjacente à au moins l'un desdits éléments végétaux (O).
